# FASCICULE DE BREVET EUROPEEN

(11) **EP 2 136 092 B1**
(45) Date de publication et mention de la délivrance du brevet: **15.08.2012**
(21) Numéro de dépôt: 09162909.7
(22) Date de dépôt: 17.06.2009
(51) Int. Cl.: F16C 33/58, F16C 19/26, D03C 1/14

(54) **Roulement pour système de tirage de métier à tisser et système de tirage comprenant un tel roulement**
Rollenlager für Zugsystem eines Webrahmens und Zugsystem, das ein solches Rollenlager umfasst
Bearing for a loom drafting system and drafting system comprising such a bearing

(30) Priorité: 19.06.2008 FR 0854063
(43) Date de publication de la demande: 23.12.2009
(73) Titulaire: STAUBLI FAVERGES, 74210 FAVERGES (FR)
(72) Inventeur: Pages, Jean Pierre, 74210, FAVERGES (FR); Marion, Sébastien, 74210, DOUSSARD (FR)
(74) Mandataire: Myon, Gérard Jean-Pierre

(56) Documents cités:
- EP-A- 0 437 896
- JP-A- 8 326 763

## Description

La présente invention concerne un roulement destiné à équiper un système de tirage de métier à tisser. D'autre part, la présente invention concerne un système de tirage comprenant un tel roulement.

Un dispositif de formation de la foule de métier à tisser comprend généralement plusieurs cadres de lisses actionnés individuellement par un système de tirage. Pour chaque cadre de lisses, le système de tirage comprend un ensemble de bielles et de leviers. Les ensembles d'un système de tirage sont montés en parallèle dans un espace réduit.

Les éléments du système de tirage sont articulés entre eux selon des liaisons pivotantes réalisées au moyen de roulements à billes ou de roulements à rouleaux. A encombrement identique, les roulements à rouleaux ont une capacité de charge supérieure aux roulements à billes. Dans un système de tirage, les roulements présentent un encombrement axial limité dont la valeur la plus courante est inférieure à 10 mm. L'assemblage, le montage, le démontage et l'entretien de ces roulements sont compliqués par cette limitation de l'encombrement axial, car les éléments qui composent ces roulements doivent être relativement compacts.

EP-A-0 437 896 décrit un roulement selon le préambule de la revendication 1 et comprenant une bague intérieure et une bague extérieure encadrant les rouleaux suivant une direction radiale, ainsi que deux flasques pour maintenir les rouleaux suivant une direction axiale. Les flasques sont disposées respectivement de part et d'autre des rouleaux. Les flasques sont solidarisées à la bague intérieure par l'intermédiaire de deux collerettes légèrement tronconiques qui sont réalisées sur la surface radiale extérieure, tournée vers les rouleaux, de la bague intérieure. Les deux collerettes coopèrent avec des surfaces complémentaires respectives de chacun des flasques.

Cependant, pour assurer une bonne tenue du roulement assemblé vis-à-vis des efforts axiaux, les flasques doivent être assemblés par ajustement serré sur la bague intérieure. Un tel assemblage requiert la dilatation par chauffage des flasques, ce qui est relativement contraignant et difficile. En outre, l'ajustement des flasques sur la bague intérieure nécessite une très grande précision dans la réalisation des surfaces tronconiques complémentaires des flasques et de la bague intérieure. Par ailleurs, pour maintenir la cohésion du roulement assemblé malgré les efforts axiaux, il faut des surfaces tronconiques complémentaires relativement étendues suivant une direction axiale, ce qui augmente sensiblement l'encombrement axial du roulement. Dans ce cas, on diminue la largeur des rouleaux au détriment de la capacité de charge.

Un roulement alternatif et moins encombrant comprend deux flasques plats fixés dans deux gorges radiales respectives réalisées sur une surface extérieure, tournée vers les rouleaux, de la bague intérieure. Chaque flasque est alors assemblé par déformation élastique sur la bague intérieure. Toutefois, l'assemblage d'un tel roulement requiert également une grande précision dans l'usinage des flasques et de ces gorges radiales. En outre, si le diamètre du fond d'une gorge radiale est supérieur au diamètre intérieur du flasque qui y est monté, ce flasque se déforme et devient instable, avec le risque de s'écarter de sa position nominale.

La présente invention vise notamment à remédier à ces inconvénients, en proposant un roulement de tirage présentant une capacité de charge élevée, une compacité importante, une bonne tenue aux efforts axiaux et dont l'assemblage est relativement facile et rapide à effectuer.

A cet effet, l'invention a pour objet un roulement, pour système de tirage de métier à tisser, comprenant :
- des rouleaux de forme sensiblement cylindrique,
- une bague intérieure et une bague extérieure s'étendant respectivement de part et d'autre des rouleaux suivant une direction radiale, la bague intérieure et la bague extérieure définissant deux chemins de roulement cylindriques, respectivement intérieur et extérieur, la bague intérieure comprenant deux surfaces latérales s'étendant radialement et étant disposées, suivant une direction axiale, de part et d'autre du chemin de roulement intérieur, ainsi que deux surfaces latérales intérieures qui ont chacune une forme globalement tronconique et qui divergent en s'éloignant d'un axe central du roulement,
- deux flasques qui sont disposés respectivement de part et d'autre du chemin de roulement intérieur suivant une direction axiale et qui sont destinés à être disposés entre deux brides latérales appartenant au système de tirage,
**caractérisé en ce que** chaque flasque comprend :
- une première partie qui s'étend radialement en regard de toute ou partie de la surface latérale correspondante ; et
- une deuxième partie adaptée pour recouvrir une partie substantielle de la surface latérale intérieure correspondante.

En d'autres termes, chaque flasque est comprimé entre une bride latérale et l'une des surfaces latérales intérieures de la bague intérieure, ce qui l'immobilise par rapport à la bague intérieure, notamment en rotation, et ce qui confère au roulement une bonne tenue aux efforts axiaux. Comme la solidarisation des flasques avec la bague intérieure s'opère au niveau des surfaces latérales intérieures, elle n'entraîne aucun encombrement axial supplémentaire.

Selon d'autres caractéristiques avantageuses mais facultatives de l'invention, prises isolément ou selon toute combinaison techniquement possible :
- chaque flasque comporte des organes de maintien et la bague intérieure comporte des moyens de réception des organes de maintien, les moyens de réception étant adaptés pour coopérer avec les organes de maintien de façon à maintenir chaque flasque sur la bague intérieure ;
- les organes de maintien comprennent au moins une patte élastiquement déformable qui prolonge localement la deuxième partie et qui présente une extrémité recourbée vers la bague intérieure, de façon à réaliser le maintien de chaque flasque sur la bague intérieure ;
- les moyens de réception sont formés par au moins une collerette réalisée sur la bague intérieure et entre les deux surfaces latérales intérieures ;
- la bague intérieure présente au moins une cavité adaptée pour recevoir au moins une patte, la collerette étant formée par des parties saillantes séparant respectivement chaque cavité de la surface latérale intérieure respective ;
- les cavités sont formées par une gorge unique qui est ménagée entre les deux surfaces latérales intérieures et qui a une forme annulaire et symétrique par rapport au plan bissecteur du roulement ;
- la collerette est formée en saillie sur une surface cylindrique séparant les deux surfaces latérales intérieures ;
- les dimensions respectives de chaque deuxième partie et de la bague intérieure correspondante sont déterminées de façon à ménager, après assemblage du roulement, un jeu axial entre chaque deuxième partie et la bague intérieure correspondante ;
- chaque deuxième partie est formée d'un collet qui prolonge la première partie correspondante en forme de couronne sensiblement plate s'étendant radialement en regard de la surface latérale correspondante ;
- chaque deuxième partie est formée de plusieurs secteurs séparés deux à deux par des entailles, chaque secteur s'étendant sensiblement suivant une direction ayant une composante radiale et une composante axiale;
- les entailles s'étendent jusque dans la couronne ;
- le nombre des entailles est compris entre 4 et 10 ; et
- les surfaces tronconiques de chaque surface latérale intérieure et de chaque deuxième partie présentent un demi-angle au sommet compris entre 20° et 60°.

Par ailleurs, l'invention a pour objet un système de tirage pour métier à tisser comprenant au moins une bielle et au moins un levier, **caractérisé en ce que** la bielle et le levier sont reliés au moyen d'un roulement tel qu'exposé ci-dessus, les brides latérales étant constituées par la bielle et solidarisées à la bague intérieure au moyen d'un boulon biconique serré au niveau des brides latérales.

L'invention sera bien comprise et ces avantages ressortiront aussi à la lumière de la description qui va suivre, donnée uniquement à titre d'exemple non limitatif et faite en référence aux dessins annexés, dans lesquels :
- la figure 1 est une vue de face d'une partie d'un système de tirage conforme à l'invention et comprenant des roulements conformes à l'invention ;
- la figure 2 est une coupe partielle, à plus grande échelle et selon la ligne II-II à la figure 1, d'un roulement conforme à l'invention ;
- la figure 3 est une vue en perspective d'un flasque appartenant au roulement de la figure 2 ;
- la figure 4 est une vue suivant la flèche IV à la figure 3 ;
- la figure 5 est une coupe, suivant la ligne V-V à la figure 4, du flasque de la figure 3 ;
- la figure 6 est une vue à plus grande échelle du détail VI à la figure 2 ;
- la figure 7 est une vue analogue à la figure 6 illustrant un état intermédiaire au cours de l'assemblage du roulement de la figure 2 ; et
- la figure 8 est une vue analogue à la figure 7 illustrant un état intermédiaire au cours de l'assemblage d'une variante au roulement de la figure 2.

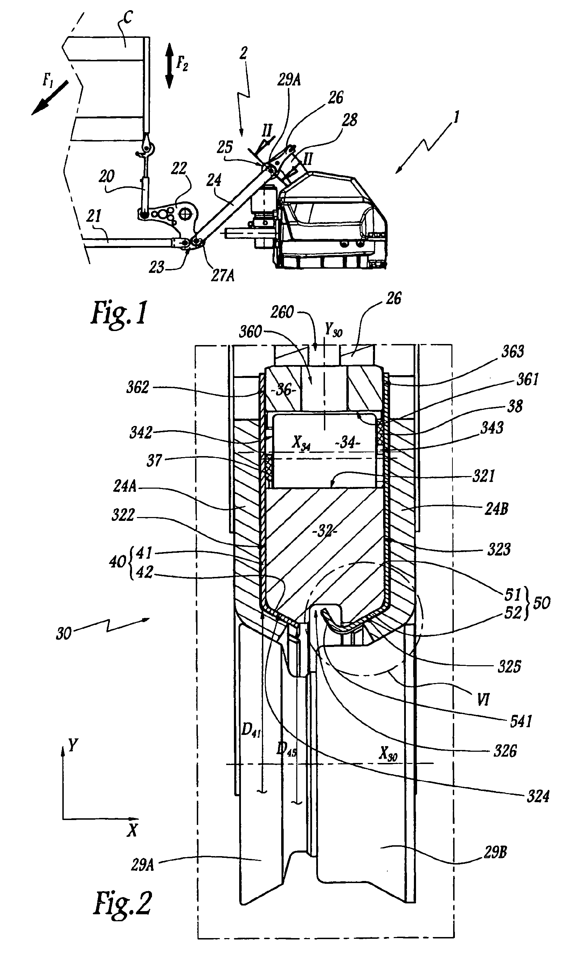

La figure 1 montre un dispositif de formation de la foule comprenant plusieurs cadres de lisses, dont l'un est représenté à la figure 1 avec la référence C. De manière connue en soi, le cadre C est équipé de lisses non représentées dont l'oeillet est traversé par un fil de chaîne symbolisé par la flèche F₁ qui indique son sens de déplacement selon une direction perpendiculaire au plan du cadre C et de la figure 1.

Chaque cadre de type C est animé d'un mouvement d'oscillations verticales suivant la double flèche F₂. Ce mouvement d'oscillations est transmis, notamment, par une bielle distale 20 attelée en partie basse du cadre C ainsi que sur un levier 22. Le levier 22 est relié, par l'intermédiaire d'une bielle proximale 24 et d'une agrafe 26 destinée au réglage de foule, à un bras d'entraînement 28, qui est lui-même mis en mouvement par une ratière 1. Le système de tirage 2 comprend en outre une bielle 21 partiellement représentée sur la figure 1 et destinée à transmettre le mouvement d'oscillations du levier 22 à l'extrémité non représentée du cadre C, par l'intermédiaire d'un autre levier et d'une autre bielle distale 20.

Les liaisons pivotantes de la bielle proximale 24 avec l'agrafe 26, d'une part, et avec le levier 22, d'autre part, sont réalisées au moyen de roulements à rouleaux décrits plus en détails en relation avec les figures 2 à 8. Les bagues extérieures des roulements à rouleaux sont destinées à être montées par emmanchement dans un alésage 25 de l'agrafe 26 ou dans un alésage 23 du levier 22. Les bagues intérieures des roulements sont solidarisées à la bielle au moyen de vis 27A ou 29A et d'écrous 29B biconiques et serrés dans la partie centrale des roulements.

La figure 2 montre un roulement 30, du type communément appelé biconique, qui réalise la liaison pivotante entre la bielle 24 et l'agrafe 26. Dans le domaine des machines textiles, un roulement biconique désigne un roulement dont la bague intérieure est serrée entre deux brides au moyen d'un boulon situé en son centre. Cette bague comporte dans son alésage deux surfaces symétriques, ouvertes sur l'extérieur du roulement, généralement coniques et destinées à coopérer avec des surfaces correspondantes des brides. Les composants roulants du roulement 30 sont adaptés pour tourner autour d'un axe X₃₀ de symétrie de révolution du roulement 30. L'axe X₃₀ forme un axe central de rotation pour le roulement 30. Les composants du roulement 30 sont guidés et maintenus axialement au moyen de deux brides latérales 24A et 24B constituées ici par des branches d'extrémité de la bielle 24.

Comme le montre la figure 2, le roulement 30 comprend une bague intérieure 32 et une bague extérieure 36 entre lesquelles roulent des rouleaux 34. La bague intérieure 32 s'étend dans un espace délimité, suivant une direction radiale symbolisée par un axe Y, par un chemin de roulement intérieur 321 des rouleaux 34. La bague extérieure 36 s'étend quant à elle au-delà, suivant la direction radiale Y, de l'espace délimité par un chemin de roulement extérieur 361 des rouleaux 34. Dans le cadre de la présente invention, les adjectifs « intérieur » et « extérieur » désignent des entités respectivement proches et éloignés de l'axe X₃₀, suivant la direction radiale Y. Pour réaliser l'entretien du roulement 30, la bague extérieure 36 comporte un trou radial 360 qui débouche, d'une part, sur le logement des rouleaux 34 et, d'autre part, sur un trou de graissage 260 ménagé dans l'agrafe 26, laquelle constitue ici une partie mâle pour l'assemblage du roulement 30.

Les chemins de roulement intérieur 321 et extérieur 361 sont donc définis respectivement par la bague intérieure 32 et par la bague extérieure 36. Les chemins de roulement intérieur 321 et extérieur 361 enveloppent les trajectoires suivies par les rouleaux 34, lesquels sont ici en forme de cylindres droits. Par cylindre on désigne un cylindre à base circulaire, car les rouleaux 34 présentent une symétrie de révolution autour de leurs axes X₃₄ respectifs.

Les rouleaux 34 présentent des flancs 342 et 343 en forme de disques perpendiculaires à une direction axiale X parallèle à l'axe X₃₀. Les flasques 40 et 50 et les bagues intérieure 32 et extérieure 36 définissent ensemble le logement des rouleaux 34. Une cage, constituée de deux secteurs annulaires 37 et 38 entretoisés entre chaque rouleau 34, est disposée respectivement entre les flasques 40 et 50. Cette cage maintient les rouleaux 34 dans leur logement et au contact des chemins de roulement intérieur 321 et extérieur 361. Il est néanmoins possible de réaliser un roulement dépourvu de cage et dont les rouleaux entrent en contact direct avec les flasques.

La surface radiale extérieure de la bague intérieure 32 définit le chemin de roulement intérieur 321. Du côté de l'axe X₃₀, la bague intérieure 32 comprend deux surfaces latérales intérieures 324 et 325. La bague intérieure 32 comprend en outre deux surfaces latérales 322 et 323 qui sont planes et perpendiculaires à la direction axiale X et qui sont disposées, suivant la direction axiale X, de part et d'autre du chemin de roulement intérieur 321. Les surfaces latérales 322 et 323 s'étendent radialement et respectivement entre le chemin de roulement intérieur 321 et chacune des surfaces latérales intérieures 324 et 325.

Chacune des surfaces latérales intérieures 324 et 325 a une forme globalement tronconique et divergente en s'éloignant de l'axe X₃₀, c'est-à-dire en direction de la surface latérale 322 ou 323 respective de la bague intérieure 32. En l'occurrence, la bague intérieure 32 présente une symétrie par rapport à son plan bissecteur qui est représenté sur la figure 2 par l'axe Y₃₀. Ainsi, les surfaces latérales 322 et 323 et les surfaces latérales intérieures 324 et 325 sont respectivement symétriques par rapport à ce plan bissecteur. Les surfaces latérales intérieures 324 et 325 divergent depuis ce plan bissecteur jusqu'à la surface latérale 322 ou 323 respective.

Le roulement 30 comprend deux flasques 40 et 50 respectivement disposés de part et d'autre des rouleaux 34, suivant la direction axiale X. Les flasques 40 et 50 ont notamment pour fonction de guider et de maintenir axialement les rouleaux 34 au travers de la cage qui les maintient. Les flasques 40 et 50 sont adaptés pour reprendre des efforts axiaux que peuvent exercer les rouleaux 34.

Comme le montrent les figures 2 à 5, chaque flasque 40 ou 50 comprend une première partie formée ici d'une couronne 41 ou 51 annulaire, globalement plate et relativement fine et dont le diamètre intérieur est noté D₄₁. Chaque flasque 40 ou 50 comprend en outre une deuxième partie formée ici d'un collet 42 ou 52, qui prolonge la couronne 41 ou 51 respective au niveau du diamètre D₄₁ et qui définit une ouverture centrale 45 de diamètre D₄₅ inférieur au diamètre D₄₁. Après assemblage du roulement 30, les couronnes 41 et 51 occupent des positions radiales extérieures, tandis que les collets 42 et 52 occupent des positions radiales intérieures.

Après assemblage du roulement 30, chaque flasque 40 ou 50 recouvre latéralement la bague intérieure 32, ainsi que les rouleaux 34 et tout ou partie de la bague extérieure 36. Plus précisément, la couronne 41 s'étend radialement en regard de la surface latérale 322, du secteur annulaire 37 de la cage jouxtant les flancs 342 et d'une surface latérale 362 de la bague extérieure 36. De même, la couronne 51 s'étend radialement en regard de la surface latérale 323, du secteur annulaire de la cage jouxtant les flancs 343 et d'une surface latérale 363 de la bague extérieure 36. Chaque couronne 41 ou 51 jouxte les rouleaux 34 sur toute leur étendue radiale, puisqu'elle recouvre latéralement la bague intérieure 32 et une partie substantielle de la bague extérieure 36.

De plus, le collet 42 du flasque 40 est adapté pour recouvrir une partie substantielle de la surface latérale intérieure 324. De même, le collet 52 du flasque 50 est adapté pour recouvrir une partie substantielle de la surface latérale intérieure 325. Le terme « adapté » indique que chaque collet 42 ou 52 présente une géométrie semblable à celle de la surface latérale intérieure 324 ou 325 respective. Le collet 42 a donc une forme globalement tronconique correspondant à la forme de la surface latérale intérieure 324. De même, le collet 52 a une forme globalement tronconique correspondant à la forme de la surface latérale intérieure 325.

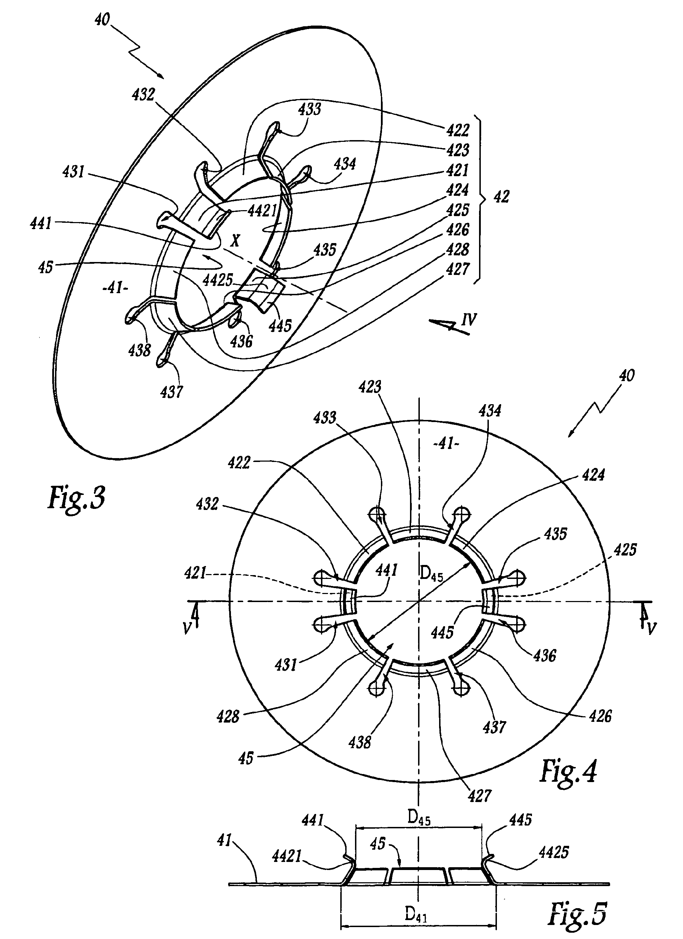

Comme le montrent les figures 3 à 5, le collet 42 est formé de huit secteurs d'anneau, les secteurs 421 à 428, qui sont séparés deux à deux par huit entailles 431 à 438 respectives. En d'autres termes, la réunion fictive des huit secteurs 421 à 428 représente une surface annulaire tronconique qui constitue le collet 42. En pratique, le nombre de ces secteurs et le nombre de ces entailles peuvent être compris entre 4 et 10. Selon une variante non représentée, chaque deuxième partie peut être continue autour de l'axe central du roulement, c'est-à-dire dépourvue d'entaille.

Chacune des entailles 431 à 438 s'étend sensiblement suivant une direction ayant une composante radiale et une composante axiale suivant l'axe X. Chacune des entailles 431 à 438 commence au centre du flasque 40, au niveau de l'ouverture centrale 45, puis « traverse » le collet 42 pour se terminer dans la partie radiale intérieure de la couronne 41. Au niveau de la couronne 41, chacune des entailles 431 à 438 se termine par une ouverture circulaire qui permet de répartir les contraintes et donc d'éviter de fragiliser le flasque 40.

Les entailles 431 à 438 confèrent une flexibilité optimale à chacun des huit secteurs 421 à 428 qui composent le collet 42, puisqu'elles permettent une déformation élastique indépendante de chacun des secteurs 421 à 428 au niveau de la couronne 41. La flexibilité de chacun des secteurs 421 à 428 rend le collet 42 d'autant plus adapté pour recouvrir la surface latérale intérieure 324, ce qui facilite l'assemblage du roulement 30. Son montage dans le système de tirage 1, en particulier la solidarisation de sa bague intérieure 32 avec les brides 24A et 24B des bielles s'en trouve également facilité. Comme indiqué ci-avant, le collet 42 ou 52 est adapté pour recouvrir une partie substantielle de la surface latérale intérieure 324 ou 325 respective. En effet, le collet 42 ou 52 recouvre la surface latérale intérieure 324 ou 325 respective, à l'exception des zones de la surface latérale intérieure 324 qui se trouvent découvertes par les entailles 431 à 438.

Le flasque 40 peut être réalisé par des opérations d'emboutissage et de découpage de façon à former la couronne 41 et le collet 42, c'est-à-dire les secteurs 421 à 428, et les entailles 431 à 438. Il est préférable de réaliser le flasque 40 en matériau dur, résistant à l'usure et aux contraintes statiques et/ou dynamiques qui s'exercent dans le roulement 30. Le flasque 40 peut par exemple être fabriqué à partir d'une tôle en acier à haute résistance.

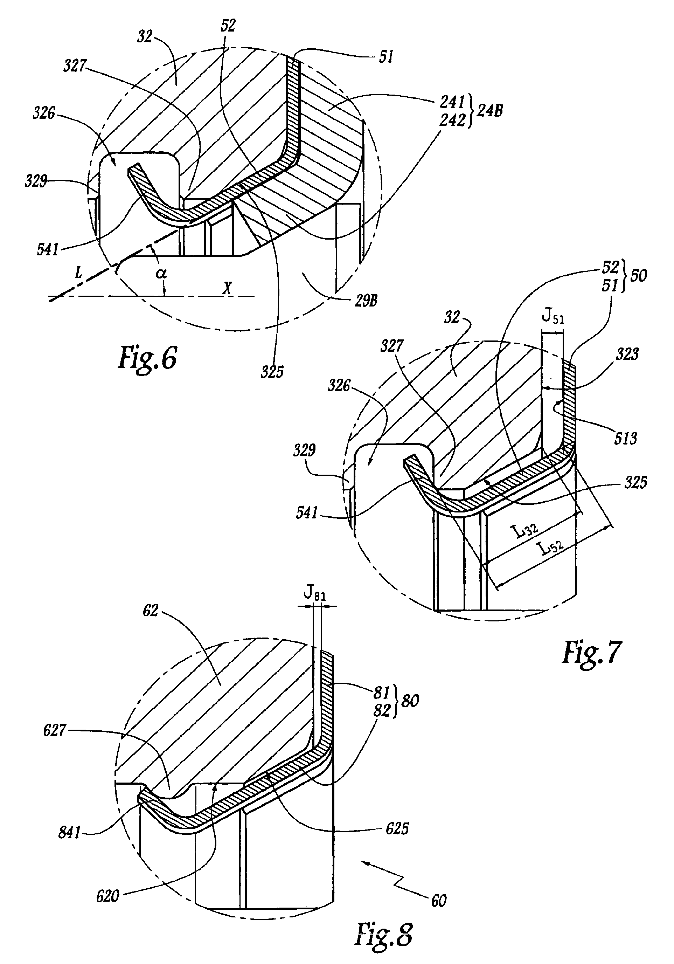

Par ailleurs, le flasque 40 comporte deux pattes 441 et 445 disposées au niveau du collet 42, de manière diamétralement opposée eu égard à l'ouverture centrale 45. Les pattes 441 et 445 sont monobloc avec les secteurs 421 et 425, dont elles sont séparées respectivement par des plis 4421 et 4425. Les pattes 441 et 445 et les secteurs 421 et 425 sont en effet issus d'une même pièce, initialement en forme de couronne plate, puis découpée et emboutie. A l'état initial de cette pièce, les pattes 441 et 445 prolongent respectivement les secteurs 421 et 425 dans le plan de la couronne 41. Chaque patte 441 et 445 forme ainsi une lamelle repliée vers la couronne 41, c'est-à-dire vers la bague intérieure 32 après assemblage du roulement 30, et suivant une inclinaison opposée à celle du collet 42. Les pattes 441 et 445 permettent notamment de réaliser le maintien du flasque 40 sur la bague intérieure 32, comme cela est décrit ci-après en relation avec les figures 6 à 8.

La description du flasque 40 donnée ici peut être directement transposée au flasque 50, dans la mesure où les flasques 40 et 50 présentent ici des structures identiques et où ils sont agencés de part et d'autre du plan bissecteur du roulement 30, qui est aussi représenté sur la figure 2 par l'axe Y₃₀. Les références numériques des éléments du flasque 50 sont obtenues en remplaçant le chiffre préfixe 4 par le chiffre préfixe 5 dans les références numériques des éléments correspondants du flasque 40. On obtient ainsi notamment la couronne 51, le collet 52, la patte 541 etc.

Inversement, la description du flasque 50 donnée en relation avec les figures 6 et 7 peut être directement transposée au flasque 40. Les références numériques des éléments du flasque 40 sont alors obtenues en remplaçant le chiffre préfixe 5 par le chiffre préfixe 4 dans les références numériques des éléments correspondants du flasque 50.

A l'état monté du roulement 30 dans le système de tirage 1, comme le montrent les figures 2 et 6, le serrage de la vis 29A dans l'écrou 29B biconiques presse les brides 24A et 24B respectivement contre les flasques 40 et 50. Les flasques 40 et 50 sont donc pressés contre la bague intérieure 32 et, en particulier, contre les surfaces latérales intérieures 324 et 325. Plus précisément, la tête tronconique de l'écrou 29B comprime une partie tronconique 242 de la bride 24B, laquelle comprime à son tour le collet 52 contre la surface latérale intérieure 325.

Dans le plan de la figure 6, qui est un plan méridien du roulement 30, le collet 52 et la surface latérale intérieure 325 s'étendent, suivant une direction oblique L. La direction oblique L forme avec la direction axiale X un angle α valant environ 30°. Comme le collet 52 et la surface latérale intérieure 325 sont tronconiques, l'angle α représente le demi-angle au sommet du collet 52 et de la surface latérale intérieure 325. En pratique, l'angle α peut être compris entre 20° et 60°.

Comme le montre la figure 7, la surface cylindrique séparant les surfaces latérales intérieures 324 et 325 de la bague intérieure 32 présente une gorge 326 de forme annulaire et symétrique par rapport au plan bissecteur de la bague intérieure 32. La gorge 326 définit deux collerettes 327 et 329 de forme annulaire et qui forment des parties saillantes entre le fond de la gorge 326 et la surface latérale intérieure 324 ou 325 respective.

Lors de l'assemblage du roulement 30, les bagues intérieure 32 et extérieure 36 sont disposées de part et d'autre des rouleaux 34, lesquels sont regroupés par la cage, puis les flasques 40 et 50 sont pressés contre la bague intérieure 32. Les deux pattes du flasque 50, dont seule la patte 541 est représentée à la figure 7, entrent en contact avec la surface latérale intérieure 325 et se déforment progressivement jusqu'à ce qu'elles pénètrent dans la gorge 326. Comme le montre la figure 7, la patte 541 est en contact avec la collerette 327 et maintient assemblés le flasque 50 et la bague intérieure 32. Il s'opère alors un clipsage qui laisse toutefois au flasque 50 un certain débattement axial compatible avec les impératifs de cohésion du roulement assemblé seul.

De façon analogue, les pattes 441 et 445 du flasque 40 entrent en contact avec la surface latérale intérieure 324 et se déforment progressivement jusqu'à ce qu'elles pénètrent dans la gorge 326. Le flasque 40 est alors maintenu associé à la bague intérieure 32. Les pattes 441, 445, 541 et équivalente constituent autant d'organes de maintien du flasque 40 ou 50 respectif sur la bague intérieure 32 et les collerettes 327 et 329 constituent des moyens de réception des pattes 441, 445 et 541.

La description donnée ici de la patte 541 et de sa coopération avec la bague intérieure 32 peut être directement transposée aux pattes 441 et 445 du flasque 40 ainsi qu'à l'autre patte du flasque 50, qui est symétrique à la patte 541 mais qui n'est pas représentée. Cependant, les pattes 441 et 445 coopèrent avec la collerette 329, sur laquelle elles se calent et qui est symétrique à la collerette 327 par rapport au plan bissecteur Y₃₀, tandis que la patte 541 et son équivalent coopèrent avec la collerette 327.

Dans le cas du roulement 30, les pattes du flasque 40, d'une part, et les pattes du flasque 50, d'autre part, se trouvent dans des positions présentant un décalage angulaire autour de l'axe X₃₀, de façon à être reçues dans la gorge 326 sans interférer entre elles. A ce décalage angulaire près, les flasques 40 et 50 et la bague intérieure 32 sont agencés symétriquement par rapport au plan bissecteur des rouleaux 34.

Selon une variante non représentée, la longueur axiale de la gorge 326 est prévue suffisamment grande pour loger les pattes des deux flasques en regard dans la même position angulaire autour de l'axe X₃₀. Les flasques peuvent alors être agencés de façon parfaitement symétrique par rapport au plan bissecteur des rouleaux 34.

Alternativement à la gorge 326 qui est unique, la bague intérieure 32 peut présenter deux cavités ou plus adaptées pour recevoir chacune une des pattes 441, 445, 541 et équivalente. Dans une telle variante, les collerettes 327 et 329 sont formées par des parties saillantes isolées qui séparent respectivement chacune de ces cavités de la surface latérale intérieure 324 ou 325 respective.

La figure 8 montre une variante au roulement des figures 2, 6 et 7, dans un état intermédiaire au cours de son assemblage. Le roulement 60 de la figure 8 comprend un flasque 80 qui est semblable au flasque 50, avec une première partie formée d'une couronne 81, une deuxième partie formée d'un collet 82 et deux pattes qui constituent des organes de maintien du flasque 80 et dont l'une est visible à la figure 8 avec la référence 841.

Le roulement 60 de la figure 8 diffère du roulement de la figure 6 en ce qu'il présente une bague intérieure 62 comprenant une collerette 627 annulaire et formée en saillie sur une surface cylindrique 620 séparant les deux surfaces latérales intérieures de la bague intérieure 62, dont l'une est visible à la figure 8 avec la référence 625. A l'instar des collerettes 327 et 329 du roulement 30, la collerette 627 forme un moyen de réception adapté pour coopérer avec les organes de maintien du flasque 80 que forment notamment la patte 841, ce qui permet de maintenir le flasque 80 sur la bague intérieure 62.

Comme le montre la figure 7, dans l'état intermédiaire où le flasque 50 est simplement maintenu mais pas encore serré sur la bague intérieure 32, un jeu axial J₅₁ est ménagé entre la bague intérieure 32 et la couronne 51. Plus précisément, le jeu axial J₅₁ est ménagé entre la surface latérale 323 de la bague intérieure 32 et la surface 513 de la couronne 51 qui lui fait face. Le jeu axial J₅₁ est maximal lorsque la patte 541 est en appui contre la collerette 327. Le jeu axial J₅₁ peut être typiquement de l'ordre de 0,3 mm. En pratique, le jeu axial J₅₁ peut être compris entre 0,05 mm et 0,5 mm. Comme dans l'exemple de la figure 7, la variante illustrée à la figure 8 prévoit un jeu axial J₈₁ entre la couronne 81 du flasque 80 et la bague intérieure 62.

Les dimensions respectives du collet 52 et de la bague intérieure 32 sont déterminées de façon à ménager le jeu axial J₅₁. En particulier, la longueur L₅₂ du collet 52 est prévue supérieure à une longueur L₃₂ caractéristique de la bague intérieure 32. Les longueurs L₅₂ et L₃₂ sont prises suivant la direction oblique L. La longueur L₅₂ s'étend de la face de la patte 541 qui est en contact avec la collerette 327 jusqu'à l'intersection fictive des faces du collet 52 et de la couronne 51 qui sont tournées vers la bague intérieure 32. La longueur L₃₂ s'étend de la face de la collerette 327 qui entre en contact avec la patte 541 jusqu'à l'intersection fictive de la surface latérale intérieure 325 et de la surface latérale 323.

Après serrage de la vis 29A dans l'écrou 29B, le jeu axial J₅₁ s'annule et la couronne 51 est en contact avec la surface latérale 323, comme le montre la figure 6. A l'état serré ou monté du roulement 30, les pattes du flasque 50, dont la patte 541, se trouvent à une distance de la collerette 327 qui correspond sensiblement au jeu axial J₅₁. Lorsque la partie tronconique 242 de la bride 24B, le collet 52 et la surface latérale intérieure 325 sont en contact, la transmission des efforts notamment axiaux est optimale et le roulement 30 remplit alors sa fonction de palier. Les collets 42 et 52 supportent les efforts axiaux et radiaux que génèrent le serrage des brides 24A et 24B par la vis 29A et l'écrou 29B biconiques.

Au cours du serrage de la vis 29A dans l'écrou 29B, le jeu axial J₅₁ et la flexibilité que les entailles 431 à 438 et équivalents confèrent aux collets 42 et 52 permettent aux flasques 40 et 50 de se positionner facilement et de manière optimale sur la bague intérieure 32. En particulier, l'accommodation des collets 52 sur la surface latérale intérieure 325 permet une grande tolérance dans le positionnement relatif de la bague intérieure 32 et des brides 24A et 24B. Par conséquent, les composants du roulement et notamment la bague intérieure 32, les flasques 40 et 50, la vis 29A et l'écrou 29B biconiques peuvent être réalisés avec une tolérance d'usinage relativement élevée, ce qui les rend peu coûteux.

Selon une variante non représentée, les moyens de réception des pattes du flasque peuvent être composés de deux gorges annulaires disposées au sein de chacune des surfaces latérales intérieures tronconiques, de façon à former deux collerettes adaptées pour coopérer avec de telles pattes. Une telle géométrie permet de minimiser l'encombrement axial de la bague intérieure, donc du roulement, dans le cas où les efforts axiaux peuvent être transmis sur une surface latérale intérieure tronconique relativement peu étendue.

Outre sa tenue élevée aux efforts axiaux, un roulement conforme à la présente invention s'avère particulièrement simple à fabriquer et à assembler. En effet, un tel roulement nécessite un nombre restreint de composants différents, car les deux flasques peuvent être identiques et car ses composants peuvent être usinés avec une tolérance relativement grande, ce qui réduit leur coût. De plus, l'usinage de la bague intérieure est relativement simple, car la gorge 326 ou la collerette 627 peuvent être usinées au cours de la même opération de tournage que les surfaces latérales intérieures tronconiques. Par ailleurs, les flasques peuvent être réalisés par de simples opérations de découpage et d'emboutissage et les organes de maintien tels que les pattes 441 et 445 peuvent même être pliées après le montage d'un flasque sur la bague intérieure, suite à un découpage préalable.

Un système de tirage conforme à l'invention est donc relativement facile à fabriquer et à assembler. De plus, les roulements qui le composent offrent une capacité de charge élevée pour un coût réduit.

D'autres modes de réalisation de cette invention sont également possibles et toute combinaison techniquement admissible des caractéristiques techniques énoncées ci-dessus constitue une variante supplémentaire.

La présente invention peut par exemple s'appliquer à un roulement étanche sans entretien dont les flasques incorporent des joints assurant l'étanchéité entre flasques et bagues extérieures, tels que des joints à lèvres.

D'autre part, les moyens de réception que forment les collerettes annulaires décrites ci-dessus peuvent être réalisés par des parties saillantes localisées sur une portion seulement de la circonférence d'une bague intérieure, en des positions correspondant à celles des organes de maintien des flasques respectifs.

Selon une autre variante non représentée, les deuxièmes parties et les surfaces latérales intérieures peuvent être composés respectivement de deux surfaces tronconiques successives et inclinées différemment sur l'axe du roulement.

Selon encore une autre variante non représentée, les deuxièmes parties et les surfaces latérales intérieures peuvent être de forme partiellement torique.

## Revendications

1. Roulement (30 ; 60), pour système de tirage (1) de métier à tisser, comprenant :
- des rouleaux (34) de forme sensiblement cylindrique,
- une bague intérieure (32 ; 62) et une bague extérieure (36) s'étendant respectivement de part et d'autre des rouleaux (34) suivant une direction radiale (Y), la bague intérieure (32 ; 62) et la bague extérieure (36) définissant deux chemins de roulement cylindriques, respectivement intérieur (321) et extérieur (361), la bague intérieure (32 ; 62) comprenant deux surfaces latérales (322, 323) s'étendant radialement et étant disposées, suivant une direction axiale (X), de part et d'autre du chemin de roulement intérieur (321), ainsi que deux surfaces latérales intérieures (324, 325 ; 625) qui ont chacune une forme globalement tronconique et qui divergent en s'éloignant d'un axe central (X₃₀) du roulement (30 ; 60),
- deux flasques (40, 50 ; 80) qui sont disposés respectivement de part et d'autre du chemin de roulement intérieur (321) suivant la direction axiale (X) et qui sont destinés à être disposés entre deux brides latérales (24A, 24B) appartenant au système de tirage (1),
**caractérisé en ce que** chaque flasque (40, 50 ; 80) comprend :
- une première partie (41, 51 ; 81) qui s'étend radialement en regard de toute ou partie de la surface latérale (322, 323) correspondante ; et
- une deuxième partie (42, 52 ; 82) adaptée pour recouvrir une partie substantielle de la surface latérale intérieure (324, 325 ; 625) correspondante.

2. Roulement (30 ; 60) selon la revendication 1, **caractérisé en ce que** chaque flasque (40, 50 ; 80) comporte des organes de maintien (441, 445, 541 ; 841) et **en ce que** la bague intérieure (32 ; 62) comporte des moyens (326, 327, 329 ; 627) de réception des organes de maintien (441, 445, 541 ; 841), les moyens de réception (326, 327, 329 ; 627) étant adaptés pour coopérer avec les organes de maintien (441, 445, 541 ; 841) de façon à maintenir chaque flasque (40, 50 ; 80) sur la bague intérieure (32 ; 62).

3. Roulement (30 ; 60) selon la revendication 2, **caractérisé en ce que** les organes de maintien comprennent au moins une patte (441, 445, 541 ; 841) élastiquement déformable qui prolonge localement la deuxième partie (42, 52 ; 82) et qui présente une extrémité recourbée vers la bague intérieure (32 ; 62), de façon à réaliser le maintien de chaque flasque (40, 50 ; 80) sur la bague intérieure (32 ; 62).

4. Roulement (30 ; 60) selon la revendication 3, **caractérisé en ce que** les moyens de réception sont formés par au moins une collerette (327, 329 ; 627) réalisée sur la bague intérieure (32 ; 62) et entre les deux surfaces latérales intérieures (324, 325 ; 625).

5. Roulement (30 ; 60) selon les revendications 3 et 4, **caractérisé en ce que** la bague intérieure (32 ; 62) présente au moins une cavité adaptée pour recevoir au moins une patte (441, 445, 541 ; 841), la collerette (327, 329 ; 627) étant formée par des parties saillantes séparant respectivement chaque cavité de la surface latérale intérieure (324, 325 ; 625) respective.

6. Roulement (30 ; 60) selon la revendication 5, **caractérisé en ce que** les cavités sont formées par une gorge unique (326) qui est ménagée entre les deux surfaces latérales intérieures (324, 325 ; 625) et qui a une forme annulaire et symétrique par rapport au plan bissecteur (Y₃₀) du roulement (30 ; 60).

7. Roulement (60) selon la revendication 4, **caractérisé en ce que** la collerette (627) est formée en saillie sur une surface cylindrique (620) séparant les deux surfaces latérales intérieures (625).

8. Roulement (30 ; 60) selon l'une des revendications précédentes, **caractérisé en ce que** les dimensions respectives (L₅₂ ; L₃₂) de chaque deuxième partie (42, 52 ; 82) et de la bague intérieure (32 ; 62) correspondante sont déterminées de façon à ménager, après assemblage du roulement (30 ; 60), un jeu axial (J₅₁) entre chaque deuxième partie (42, 52 ; 82) et la bague intérieure (32 ; 62) correspondante.

9. Roulement (30 ; 60) selon l'une des revendications précédentes, **caractérisé en ce que** chaque deuxième partie (42, 52 ; 82) est formée d'un collet qui prolonge la première partie (41, 51 ; 81) correspondante en forme de couronne sensiblement plate s'étendant radialement en regard de la surface latérale (322, 323) correspondante.

10. Roulement (30 ; 60) selon l'une des revendications précédentes, **caractérisé en ce que** chaque deuxième partie (42, 52 ; 82) est formé de plusieurs secteurs (421 ; 422 ; 423 ; 424 ; 425 ; 426 ; 427 ; 428) séparés deux à deux par des entailles (431 ; 432 ; 433 ; 434 ; 435 ; 436 ; 437 ; 438), chaque secteur (421 ; 422 ; 423 ; 424 ; 425 ; 426 ; 427 ; 428) s'étendant sensiblement suivant une direction (L) ayant une composante radiale et une composante axiale.

11. Roulement (30 ; 60) selon les revendications 9 et 10, **caractérisé en ce que** les entailles (431 ; 432 ; 433 ; 434 ; 435 ; 436 ; 437 ; 438) s'étendent jusque dans la couronne (41, 51 ; 81).

12. Roulement (30 ; 60) selon l'une des revendications 10 et 11, **caractérisé en ce que** le nombre des entailles (431 ; 432 ; 433 ; 434 ; 435 ; 436 ; 437 ; 438) est compris entre 4 et 10.

13. Roulement (30 ; 60) selon l'une des revendications précédentes, **caractérisé en ce que** les surfaces tronconiques de chaque surface latérale intérieure (324, 325 ; 625) et de chaque deuxième partie (42, 52 ; 82) présentent un demi-angle (α) au sommet compris entre 20° et 60°.

14. Système de tirage (1) pour métier à tisser comprenant au moins une bielle (20, 21, 24) et au moins un levier (22), **caractérisé en ce que** la bielle (24) et le levier (22) sont reliés au moyen d'un roulement (30 ; 60) selon l'une des revendications précédentes, les brides latérales (24A ; 24B) étant constituées par la bielle (24) et solidarisées à la bague intérieure (32 ; 62) au moyen d'un boulon biconique (29A, 29B) serré au niveau des brides latérales (24A ; 24B).

## Claims

1. A bearing (30; 60) for a puller system (1) of a weaving loom, the bearing comprising:
• rollers (34) of substantially cylindrical shape;
• an inner ring (32; 62) and an outer ring (36) extending respectively on either side of said rollers (34) with respect to a radial direction (Y), said inner ring (32; 62) and said outer ring (36) defining respective inner and outer cylindrical raceways (321; 361), the inner ring (32; 62) comprising two lateral surfaces (322, 323) extending radially and disposed in an axial direction (X) on either side of said inner raceway (321), and two inner lateral surfaces (324, 325; 625) each presenting a generally frustoconical shape and diverging on going away from a central axis (X₃₀) of said bearing (30; 60); and
• two bearing shields (40, 50; 80) disposed respectively on either side of said inner raceway (321) in said axial direction (X) and designed to be placed between two lateral flanges (24A, 24B) belonging to said puller system (1);
**characterized in that** each bearing shield (40, 50; 80) comprises:
• a a first portion (41, 51; 81) extending radially over all or part of the corresponding lateral surface (322, 323); and
• a a second portion (42, 52; 82) adapted to cover a substantial portion of the corresponding inner lateral surface (324, 325; 625).

2. A bearing (30; 60) according to claim 1, **characterized in that** each bearing shield (40, 50; 80) comprises holder members (441, 445, 541; 841), and **in that** said inner ring (32; 62) comprises receiving means (326, 327, 329; 627) for receiving said holder members (441, 445, 541; 841), said receiving means (326, 327, 329; 627) being adapted to co-operate with said holder members (441, 445, 541; 841) so as to hold each bearing shield (40, 50; 80) on said inner ring (32; 62).

3. A bearing (30; 60) according to claim 2, **characterized in that** said holder members comprise at least one elastically deformable tab (441, 445, 541; 841) that locally extends said second portion (42, 52; 82) and that presents an end that is curved towards said inner ring (32; 62) so as to hold each bearing shield (40, 50; 80) to the inner ring (32; 62).

4. A bearing (30; 60) according to claim 3, **characterized in that** said receiving means are formed by at least one rim (327, 329; 627) formed on said inner ring (32; 62) and between said two inner lateral surfaces (324, 325; 625).

5. A bearing (30; 60) according to any of claims 3 or 4, **characterized in that** said inner ring (32; 62) presents at least one cavity adapted to receive at least one tab (441, 445, 541; 841), said rim (327, 329; 627) being formed by projecting portions lying between respective cavities in the respective inner lateral surface (324, 325; 625).

6. A bearing (30; 60) according to claim 5, **characterized in that** said cavities are formed by a single groove (326) that is formed between said two inner lateral surfaces (324, 325; 625) and that is annular in shape and symmetrical about the bisector plane (Y₃₀) of said bearing (30; 60).

7. A bearing (60) according to claim 4, **characterized in that** said rim (627) is formed projecting on a cylindrical surface (620) between said two inner lateral surfaces (625).

8. A bearing (30; 60) according to any of the preceding claims, **characterized in that** the respective dimensions (L₅₂; L₃₂) of each second portion (42, 52; 82) and of the corresponding inner ring (32; 62) are determined so as to leave, after assembly of the bearing (30; 60), an axial clearance (J₅₁) between each second portion (42, 52; 82) and the corresponding inner ring (32; 62).

9. A bearing (30; 60) according to any of preceding claims, **characterized in that** each second portion (42, 52; 82) is formed by a collar that extends the corresponding first portion (41, 51; 81) that is in the form of a substantially flat annulus that extends radially facing the corresponding lateral surface (322, 323).

10. A bearing (30; 60) according to any of preceding claims, **characterized in that** each second portion (42, 52; 82) is formed by a plurality of sectors (421; 422; 423; 424; 425; 426; 427; 428) that are separated in pairs by notches (431; 432; 433; 434; 435; 436; 437; 438), each sector (421; 422; 423; 424; 425; 426; 427; 428) extending substantially along a direction (L) that has a radial component and an axial component.

11. A bearing (30; 60) according to claims 9 and 10, **characterized in that** said notches (431; 432; 433; 434; 435; 436; 437; 438) extend into said annulus (41, 51; 81).

12. A bearing (30; 60) according to any of claims 10 and 11, **characterized in that** the number of notches (431; 432; 433; 434; 434; 436; 437; 438) lies in the range 4 to 10.

13. A bearing (30; 60) according to any of the preceding claims, **characterized in that** the frustoconical surfaces of each inner lateral surface (324, 325; 625) and of each second portion (42, 52; 82) present a half-angle (α) at the apex lying in the range 20° to 60°.

14. A puller system (1) for a weaving loom including at least one link rod (20, 21, 24) and at least one lever (22), the system being **characterized in that** said link rod (24) and said lever (22) are connected together by means of a bearing (30; 60) according to claim 1, said lateral flanges (24A; 24B) being constituted by said link rod (24) and being secured to said inner ring (32; 62) by means of a biconical bolt and nut fastener (29A, 29B) tightened against said lateral flanges (24A; 24B).

## Patentansprüche

1. Rollenlager (30; 60) für ein Zugsystem (1) einer Webmaschine, umfassend:
- Rollen (34) in im Wesentlichen zylindrischer Form,
- einen Innenring (32; 62) und einen Außenring (36), die sich jeweils beidseitig der Rollen (34) gemäß einer radialen Richtung (Y) erstrecken, wobei der Innenring (32; 62) und der Außenring (36) zwei zylindrische Abrollbahnen, jeweils innen (321) und außen (361), begrenzen und wobei der Innenring (32; 62) zwei Seitenflächen (322, 323), die sich radial erstrecken und gemäß einer axialen Richtung (X) beidseitig der Inneren Rollbahn (321) angeordnet sind, sowie zwei innere Seitenflächen (324, 325; 625) aufweist, die jede eine im Ganzen gesehen kegelstumpfartige Form hat und die bei Entfernung von einer Mittelachse (X₃₀) des Rollenlagers (30; 60) divergieren,
- zwei Flansche (40, 50; 80), die jeweils beidseitig der inneren Rollbahn (321) gemäß der axialen Richtung (X) angeordnet sind und die vorgesehen sind, zwischen zwei Seitenbügel (24A, 24B), die zu dem Zugsystem (1) gehören, angeordnet zu werden,
**dadurch gekennzeichnet, dass** jeder Flansch (40, 50; 80) umfasst:
- ein erstes Teil (41, 51; 81), das sich radial gegenüberstehend zu der gesamten oder zu einem Teil der korrespondierenden Seitenfläche (322, 323) erstreckt; und
- ein zweites Teil (42, 52; 82), das angepasst Ist, einen wesentlichen Teil der inneren korrespondierenden Seitenfläche (324, 325; 625) zu bedecken.

2. Rollenlager (30; 60) nach Anspruch 1, **dadurch gekennzeichnet, dass** jeder Flansch (40, 50; 80) Halteorgane (441, 445, 541; 841) umfasst und dass der Innenring (32; 62) Mittel (326, 327, 329; 627) zur Aufnahme der Halterorgane (441, 445, 541; 841) aufweist, wobei die Aufnahmemittel (326, 327, 329; 627) angepasst sind, um mit den Halteorganen (441, 445, 541; 841) derart zusammenzuarbeiten, dass jeder Flansch (40, 50; 80) an dem Innenring (32; 62) gehalten wird.

3. Rollenlager (30; 60) nach Anspruch 2, **dadurch gekennzeichnet, dass** die Halteorgane mindestens einen elastisch verformbaren Ansatz (441, 445, 541; 841) umfassen, der lokal das zweite Teil (42, 52; 82) verlängert und der ein zu dem Innenring (32; 62) abgebogenes Ende aufweist, um den Halt jedes Flansches (40, 50; 80) an dem Innenring (32; 62) herzustellen.

4. Rollenlager (30; 60) nach Anspruch 3, **dadurch gekennzeichnet, dass** die Aufnahmemittel durch mindestens einen Bund (327, 329; 627) gebildet werden, der an dem Innenring (32; 62) und zwischen den zwei inneren Seitenflächen (324, 325; 625) hergestellt ist.

5. Rollenlager (30; 60) nach den Ansprüchen 3 und 4, **dadurch gekennzeichnet, dass** der Innenring (32; 62) mindestens einen Hohlraum aufweist, der ausgebildet ist, um mindestens einen Ansatz (441, 445, 541; 841) aufzunehmen, wobei der Bund (327, 329; 627) durch hervorspringende Bereiche gebildet wird, die jeweils jeden Hohlraum von der jeweiligen Inneren Seitenfläche (324, 325; 625) trennen.

6. Rollenlager (30; 60) nach Anspruch 5, **dadurch gekennzeichnet, dass** die Hohlräume durch eine einzige Nut (326) gebildet werden, die zwischen die zwei Inneren Seitenflächen (324, 325; 625) eingearbeitet Ist und die eine Ringform aufweist und symmetrisch in Bezug auf die Haibierungsebene (Y₃₀) des Rollenlagers (30; 60) Ist.

7. Rollenlager (30; 60) nach Anspruch 4, **dadurch gekennzeichnet, dass** der Bund (627) hervorspringend auf einer zylindrischen Fläche (620) ausgebildet ist, die die zwei inneren Seitenflächen (625) trennt.

8. Rollenlager (30; 60) nach einem der vorhergehenden Ansprüche, **dadurch gekennzeichnet, dass** die jeweiligen Abmessungen (L₅₂; L₃₂) jedes zweiten Teils (42, 52; 82) und des korrespondierenden Innenringes (32; 62) derart bestimmt sind, dass nach dem Zusammenbau des Rollenlagers (30; 60) ein axiales Spiel (J₅₁) zwischen jedem zweiten Teil (42, 52; 82) und dem korrespondierenden Innenring (32; 62) vorgesehen ist.

9. Rollenlager (30; 60) nach einem der vorhergehenden Ansprüche, **dadurch gekennzeichnet, dass** jedes zweite Teil (42, 52; 82) durch einen Kragen gebildet wird, der das korrespondierende erste Teil (41, 51; 81) in Form eines im Wesentlichen ebenen Kranzes verlängert, der sich radial gegenüberstehend zu der korrespondierenden Seitenfläche (322, 323) erstreckt.

10. Rollenlager (30; 60) nach einem der vorhergehenden Ansprüche, **dadurch gekennzeichnet, dass** jedes zweite Teil (42, 52; 82) aus mehreren Sektoren (421; 422; 423; 424; 425; 426; 427; 428) gebildet ist, die paarweise durch Einschnitte (431; 432; 433; 434; 435; 436; 437; 438) getrennt sind, wobei jeder Sektor (421; 422; 423; 424; 425; 426; 427; 428) sich im Wesentlichen gemäß einer Richtung (L) erstreckt, die eine radiale Komponente und eine axiale Komponente aufweist.

11. Rollenlager (30; 60) nach den Ansprüche 9 und 10, **dadurch gekennzeichnet, dass** sich die Einschnitte (431; 432; 433; 434; 435; 436; 437; 438) bis in den Kranz (41, 51; 81) erstrecken.

12. Rollenlager (30; 60) nach den Ansprüche 10 und 11, **dadurch gekennzeichnet, dass** die Anzahl der Einschnitte (431; 432; 433; 434; 435; 436; 437; 438) zwischen 4 und 10 liegt.

13. Rollenlager (30; 60) nach einem der vorhergehenden Ansprüche, **dadurch gekennzeichnet, dass** die kegelstumpfförmigen Flächen jeder inneren Seitenfläche (324, 325; 625) und jedes zweiten Teils (42, 52; 82) einen spitzen Halbwinkel (α) aufweisen, der zwischen 20° und 60° liegt.

14. Zugsystem (1) für eine Webmaschine, das mindestens eine Stange (20, 21, 24) und mindestens einen Hebel (22) umfasst, **dadurch gekennzeichnet, dass** die Stange (24) und der Hebel (22) mittels eines Rollenlagers (30; 60) nach einem der vorhergehenden Ansprüche verbunden sind, wobei die Seitenbügel (24A, 24B) von der Stange (24) gebildet werden und mit dem Innenring (32; 62) mittels eines bikonischen Bolzens (29A, 29B) befestigt sind, der an die Seitenbügel (24A, 24B) geklemmt ist.
